# EUROPEAN PATENT APPLICATION

(11) **EP 1 138 959 A1**
(43) Date of publication of application: **04.10.2001**
(21) Application number: 01301133.3
(22) Date of filing: 08.02.2001
(51) Int. Cl.: F16B 5/06

(54) **Clip assembly**

(30) Priority: 29.03.2000 GB 0007489
(71) Applicant: McKechnie Specialist Products Limited, Aldrige, Walsall, West Midlands WS9 8DS (US)
(72) Inventor: Wright, Michael J., Willenhall, West Midlands WV13 2JS (GB)
(74) Representative: Barnfather, Karl Jon, Dr.

(57) **Abstract**

A clip assembly (10) for retaining two or more panels together comprising a clip (12) having a first abutment (34), and second abutment (52) moveable between first and second positions to enable the clip (12) to pass through an opening in the panels and a pin (14) locatable with respect to the clip (12) to cause the second abutment (52) to remain in the second position thereby to enable the tension of two or more panels between first and second abutments (34,52).

## Description

The invention relates to clips for retaining two or more panels together.

It is known to provide a variety of co-operating threaded members such as nuts or bushes, and co-operating screws or bolts in order to retain two or more panels together. However, such co-operating threaded elements require relatively complex assembly.

An object of the invention is to provide means for retaining two or more panels relative to one another which is relatively easy to use and or simple to manufacture. Another object of the invention is to provide retaining means which are capable of handling relatively high loads and or which are accurate and/or positively Locatable with respect to two or more panels.

According to a first aspect of the invention there is provided a clip assembly for retaining two or more panels together comprising a clip having a first abutment and a second abutment moveable between first and second positions to enable the clip to pass through an opening in the panels, and a pin locatable with respect to the clip to cause the second abutment to remain in the second position thereby to enable retention of the two or more panels between the first and second abutments.

Preferably the second abutment is resiliently biased to the first position; beneficially therefore enabling the clip to be inserted into the panel opening without requiring any positive action on the second abutment.

Preferably the second abutment is formed proximal a wall of the clip and operably protrudes beyond the wall in the second position. Preferably, the abutment protrudes slightly beyond the wall in the first position; beneficially thereby enabling positive location of the clip with respect to the two or more panels prior to insertion of the pin.

Preferably, the pin and second abutment comprise co-operating camming means. In one form the second abutment comprises a cam surface such as a heel and or the pin comprises a cam surface such as a tapered portion.

Preferably the clip comprises means for retaining the pin such as an aperture having peripheral barbs for engaging a portion-of the pin.

Preferably two or more pairs of first and second abutments are provided on a clip.

According to another aspect of the invention there is provided a clip assembly for retaining two or more panels together comprising a clip having a first abutment, a resiliently movable second abutment, a moveable element, such as a pin, having means for effecting movement of the second abutment to a retaining position whereby the first and second abutment are operable to maintain two or more panels together.

An embodiment of the invention will now be described, by way of an example only, with reference to the accompanying drawings, in which:
Figure 1 is a schematic perspective view of a clip assembly according to the invention in a pre formed configuration;
Figure 2 is a schematic perspective view of the assembly shown in figure 1 in a partially formed configuration;
Figure 3 is a perspective view of the clip assembly shown in figures 1 and 2 in a formed configuration;
Figure 4 is a schematic side elevation view of the clip shown in figures 1, 2, and 3;
Figure 5 is a schematic edge view of part of the clip shown in figures 1 to 4 operably gripping two panels; and
Figure 6 is a schematic side view of an embodiment of a pin according to the invention.

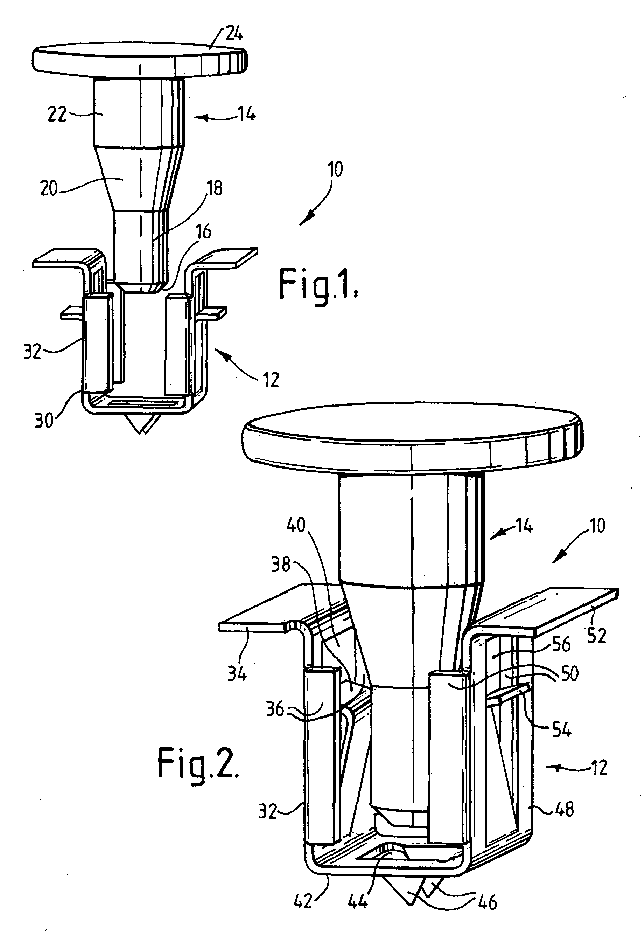

Referring to figures 1 to 5, there is shown a clip assembly 10 according to the invention, comprising a clip 12 and a pin 14. Pin 14 comprises a tapered nose 16, a first cylindrical portion 18, a tapered portion 20 and a second cylindrical portion 22. Pin 14 further comprises an end tab 24 for ease of insertion of the pin into clip assembly 10. Pin 14 can be formed of glass filled nylon for example. The percentage glass content can be between 30 and 70%. It is noted that tab 24 is not necessarily larger than cylindrical portion 22. Alternatively the tab can form a much larger panel such that pin 14 can be integrally formed within such a panel.

Referring to clip 12, it comprises a U shaped body 30 having a first side 32 comprising a first abutment or lug 34 and two inwardly directed edge flanges 36. A moveable member 38 is formed in an aperture 40 in first side 32. Body 30 comprises an end 42 having an aperture 44 for receiving both portions 16 and first cylindrical portion 18 of pin 14. One or more means for retaining pin 14 relative to the clip are preferably provided proximal aperture 44. In this example a pair of barbs 46 are disposed on opposite sides of the aperture.

Body 30 comprises a second side 48 having a pair of inwardly directed edge flanges 50 and providing a further first abutment or lug 52. Side 48 further comprises a moveable member 54 formed within an aperture 56.

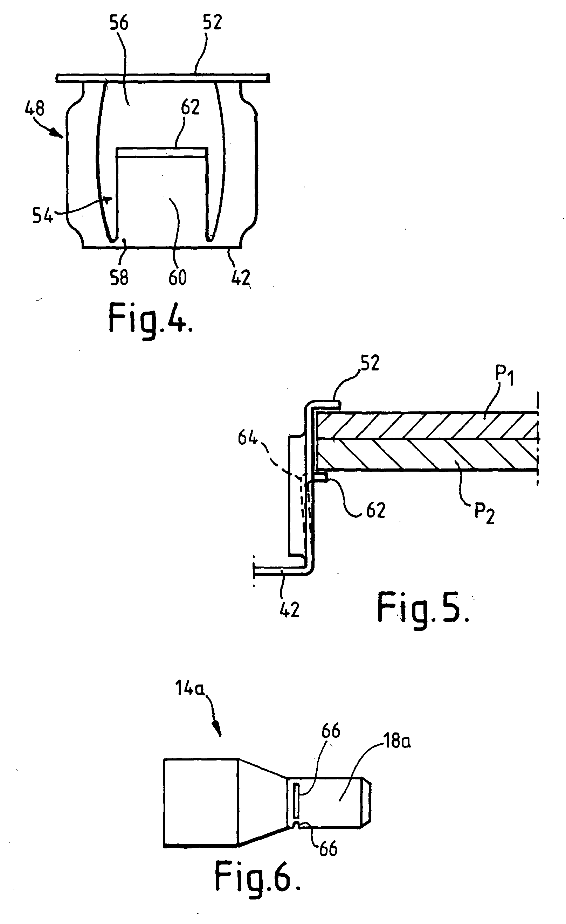

Moveable members 54 and 38 are substantially the same and reference is made here to moveable member 54 for further detail as shown in figure 4. Moveable member 54 is pivotally attached on a fold or pivot 58. Moveable member 54 comprises a body portion 60 which extends to a lug or second abutment 62.

Clip 12 can be formed from sheet material such as spring steel by first stamping the sheet material to form the correct shape, followed by bending edge flanges 36 and 4 50, bending barbs 46 downwardly, bending first abutments 34 and 52, and bending second abutment 62 for each of moveable members 38 and 54. Preferably the moveable members 38 and 54 are also displaced relative to their respective side walls 32 or 48 for position whereby the end of the second abutment 62 protrudes only slightly beyond the face of the respective side wall. Finally, the U shape body 30 is formed thereby to create the clip shown in figures 1 and 2 example for.

Accordingly, it should be appreciated that moveable members 38 and 54 each comprise a heel such as heel 64 adjacent second abutment 62.

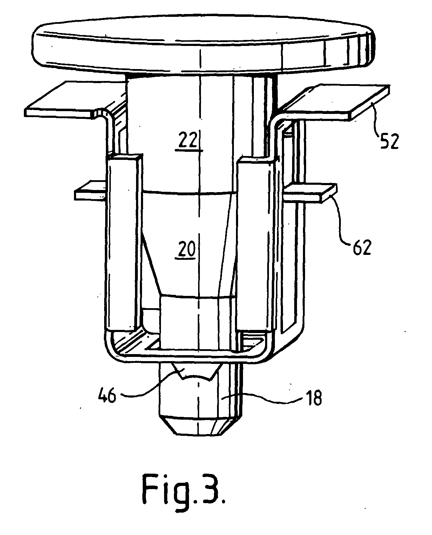

In use, clip 12 is inserted into an aperture or slot formed in one or more panels such as panel P1 and panel P2 shown in figure 5. Beneficially, the resilient nature of the movable member and the fact that first abutment 62 only marginally protrudes beyond side wall 48 enables the clip 12 to be easily inserted and moreover positively located due to the outward motion of the moveable member due to its own resilience. Once located, pin 14 is inserted as shown from figures 1 to 3. Accordingly, as nose portion 16 is directed towards aperture 44, heel 64 of the moveable members 38 and 54 initially abut the first member portion 18 and in turn tapered (or frusto conical) portion 20. The outwardly tapering nature of portion 20 causes the moveable members 38 and 54 to move outwardly thereby causing the second abutments 62 to protrude further beyond their associated side wall. Eventually, nose portion 16 passes beyond the ends of barbs 46 which operably engage the first cylindrical portion 18 and act to retain pin 14 in position as shown in figure 3. In the retained position, the moveable members 38 and 54 are displaced sufficiently outwardly to effect an abutment surface for abutting part of a panel such as panel P2 shown in figure 5 whereby first abutment 52 and second abutment 62 operably provide effective means for retaining panels P 1 and P2 together.

Referring to figure 6, there is shown a second embodiment of a pin according to the invention. Pin 14A comprises means for enabling separation of first cylindrical portion 18A from the rest of the pin thereby to assist in removal of the pin 14A from the clip assembly 10. The means can for example comprise a circumferential line of weakness around cylindrical portion 18A for example formed by a series of depressions 66 in portion 18A. Beneficially therefore, pin 14A retains a large degree of structural integrity thereby meeting requirements to help retain panels in position but enabling rotational weakness such as a rotational sheer to effect breakage of the pin thereby to remove a large part of the pin from the clip assembly.

## Claims

**1.** A clip assembly for retaining two or more panels together comprising a clip having a first abutment, and second abutment moveable between first and second positions to enable the clip to pass through an opening in the panels and a pin locatable with respect to the clip to cause the second abutment to remain in the second position'thereby to enable the tension of two or more panels between first and second abutments.

**2.** A clip assembly according to claim 1 wherein the second abutment is resiliently biased to a first position.

**3.** A clip assembly according to claim 1 or 2 wherein the second abutment is formed proximal a wall of the clip and operably protrudes beyond the wall in the second position.

**4.** A clip assembly according to claim 1, 2 or 3 wherein the second abutment protrudes slightly beyond the wall in the first position.

**5.** A clip assembly according to any preceding claim wherein the pin and second abutment comprise co-operating camming means.

**6.** A clip assembly according to claim 5 wherein the second abutment comprises a cam surfaces such as a heel and or the pin comprises a cam surfaces such as a tapered portion.

**7.** A clip assembly according to any preceding claim wherein the clip comprises means for retaining the pin.

**8.** A clip assembly according to claim 7 wherein the clip comprises an aperture having a peripheral barb for engaging a portion of the pin.

**9.** A clip assembly according to any preceding claim comprising two or more pairs of first and second abutments on the clip.

**11.** A clip assembly for retaining two or more panels together comprising a clip having a first abutment, a resiliently moveable second abutment, a moveable element, such as a pin, having means for effecting movement of the second abutment to a retaining position whereby the first and second abutment are operably operable to retain two or more panels together.

**12.** A pin for a clip assembly according to any preceding claim.

**13.** A clip for a clip assembly according to any preceding claim.
